# EUROPEAN PATENT SPECIFICATION

(11) **EP 2 761 719 B1**
(45) Date of publication and mention of the grant of the patent: **06.01.2016**
(21) Application number: 12778059.1
(22) Date of filing: 01.10.2012
(51) Int. Cl.: H02J 9/02, H02J 9/06

(54) **MAINS DETECTION IN EMERGENCY LIGHTING SYSTEMS**
VERSORGUNGSNETZERKENNUNG IN NOTBELEUCHTUNGSSYSTEMEN
DÉTECTION DU SECTEUR DANS DES SYSTÈMES D'ÉCLAIRAGE DE SECOURS

(30) Priority: 30.09.2011 GB 201116882
(43) Date of publication of application: 06.08.2014
(73) Proprietor: Tridonic Uk Ltd, Chineham, Basingstoke RG24 8LB (GB)
(72) Inventor: WOOD, Anthony, John, Penshaw Houghton Le Spring (GB)
(74) Representative: Rupp, Christian
(86) International application number: PCT/EP2012/069378
(87) International publication number: WO 2013/045709

(56) References cited:
- JP-A- 6 140 962
- JP-A- 2001 178 019

## Description

### TECHNICAL FIELD

The present invention relates to a lighting power monitoring system for detecting availability of a normal or abnormal mains supply at a mains input to enable activation of an emergency lighting mode in dependence thereon. The invention also relates to a lighting controller and lighting system including such a lighting power monitoring system.

### BACKGROUND TO THE INVENTION

Prior art can be found in the document WO 2011/091458 A2 disclosing an operating device for operating illuminants, especially LEDs, comprising connections for drawing power from a power supply network, a downstream network filter and a rectifier having a monitoring circuit for identifying whether an alternative voltage is applied to the connections for drawing power or not, said monitoring circuit comprising a capacitive voltage divider which is interposed between one of the two inputs of the rectifier and ground.

Further, various arrangements for lighting systems are known which provide both conventional and emergency lighting. Such emergency lighting is intended to be activated when the conventional lighting is no longer operative because the direct mains supply to the conventional lighting is no longer available or malfunctions. Emergency lighting is typically powered by a battery or other energy storage device. Conventional lighting is controlled by an on/off switch by means of which a user (or control system) can control whether the lighting is illuminated or not. Generally, emergency lighting is intended to be automatically illuminated when the absence of mains power or the malfunction of mains power for the conventional lighting is detected in some way. Emergency lighting may be used to allow escape from buildings that would otherwise be in darkness due to the inoperativeness of the conventional lighting.

Emergency lighting and conventional lighting may share components. For example, the same lamp (such as a gas discharge lamp or LED) and/or ballast may be used for both conventional and emergency lighting. Other components may also be shared.

A lighting system comprising emergency lighting and conventional lighting may be considered to have two operating modes. In a normal mode, when the direct mains supply is operating normally (within the normal voltage range), a switched mains input, controlled by an on/off switch, is monitored, and the lamp is illuminated or extinguished in dependence upon the switched mains input.

In an emergency mode, when the mains supply is not available or is malfunctioning (is outside the normal voltage range), the lamp is illuminated automatically, irrespective of the status of the switched mains input, using power from a battery or other storage element.

In some lighting systems it is possible to power the lamp in an emergency from a DC voltage at the mains input (which is normally powered by AC), provided from a centralised battery storage system.

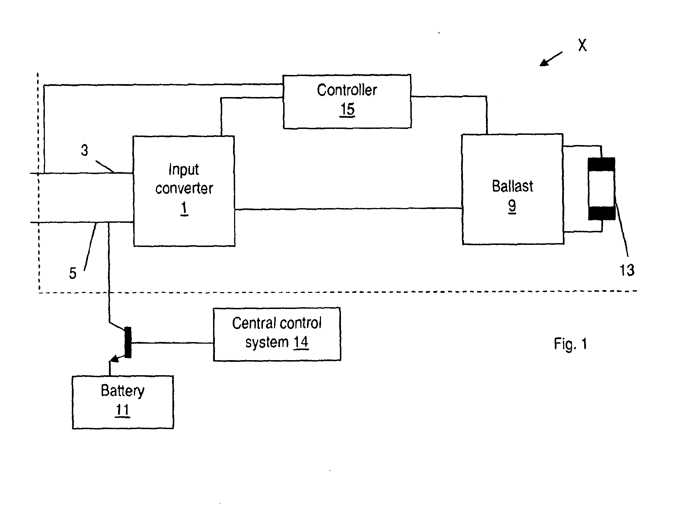

Figure 1 shows the basic elements of such a known lighting system, designated generally at X, which comprises an input converter 1 which receives the switched mains input 3 and the direct mains input 5. The lighting system further comprises an electronic ballast 9 and a lamp 13 such as a fluorescent lamp or LED. An electronic controller 15 controls the operation of the lighting system, including activating emergency lighting when appropriate. These elements of the lighting system shown in Figure 1 may be provided in a luminaire.

Figure 1 further shows a battery 11 which provides power in an emergency situation. Battery power is applied when a central control system 14 detects the failure of the mains supply.

The lighting system has a normal mode and an emergency mode. The same electronic ballast 19 is used both in the emergency mode and the normal mode to supply current to the lamp 13. The emergency mode should be activated by the controller 15 when the direct mains input 5 is not available or malfunctions. The normal mode should be activated by the controller 15 when the direct mains 5 is present and operating correctly, and in this mode the lamp 13 is illuminated when the switched mains 3 is on.

In more detail, the input converter 1 receives the direct mains input voltage 5 and provides DC output to supply current to the electronic ballast 9. The switched mains input 3 is monitored either directly or indirectly by the controller 15. The controller 15 also determines whether or not the direct mains input 5 is operating normally or not.

When the controller 15 determines that the direct mains 5 is operating normally and that the switched mains input 3 is on, the electronic controller 15 activates the electronic ballast 9 to illuminate the lamp 13.

When the controller 15 detects that the direct mains input 5 is not normal (emergency mode), the controller 15 activates the electronic ballast 9 to illuminate the lamp 13.

When in the normal mode the electronic controller 15 may operate the ballast 9 in a different manner to the emergency mode.

The controller 15 may determine the status of the switched live input 3 in any suitable manner. For example, it is known to apply the switched mains input 3 to a potential divider, and then to a voltage threshold detector with an isolation circuit, such as an opto-coupler. Typically, the mains input 3 is rectified by a rectifier before be applied to the voltage threshold detector and the isolation circuit. When the switched live input 3 is on, the output of the isolation circuit will be a pulsed signal, the presence of which can be detected by logic within the controller 15. When the switched live input is off, the output of the isolation circuit will be a constant value (zero volts) and this can also be detected by logic of the controller 15.

As discussed above, the direct mains input 5 is also monitored by the controller 15. The purpose of this monitoring is to determine whether the direct mains input 5 is a normal AC mains signal or a DC signal from the battery 11. It is desirable for the controller 15 to be aware of whether the direct mains input 5 is from a conventional mains supply or is in fact a DC signal derived from the battery 11. For example, the controller 15 can use this information to optimise operation of the ballast 9.

One way of detecting whether the mains input 5 is AC or DC is to use a large class X capacitor across the mains to power an opto-coupler. The opto-coupler produces pulses which vary dependent on the waveform at the mains input 5, and these are evaluated by the controller 15. However, such a known arrangement suffers from several disadvantages. Firstly the class X capacitor is expensive, and the capacitor will suffer derogation over its life so must have a large initial value for the detection to operate correctly in long term use. Secondly, the pulses produced by the opto-coupler in some circumstances can be difficult for the micro controller 15 to interpret to determine whether or not the mains input is AC or DC. For example, it may be difficult for the controller 15 to identify pulsed DC, static DC, or phase or polarity problems. It can also be difficult to tolerance the circuit to work over large input ranges. Also, distorted DC signals can result in the controller 15 incorrectly identifying these as AC signals.

In summary, known arrangements do not reliably distinguish between AC and DC at the mains input, and use multiple expensive, bulky components, such as opto-couplers.

### SUMMARY OF THE INVENTION

In one aspect the present invention provides a lighting power monitoring system for detecting the availability of a normal or abnormal mains supply at a mains input to enable activation of an emergency lighting mode in dependence thereon, the system including a low-pass filter coupled to the mains input for producing a low-pass filtered output, and emergency lighting mode detection means arranged to generate a status signal indicative of the normal or abnormal status of the mains input, characterized in that the low-pass filter is configured to remove AC components from the mains input such that the emergency lighting mode detection means is able to detect DC components from the mains input.

In the embodiments to be described a signal derived from the low-pass filtered output is applied to the emergency lighting mode detection means.

In some of the embodiments to be described the status signal indicative of the normal or abnormal status of the mains input has a value dependent upon the signal derived from the low-pass filtered output.

In the embodiments to be described the lighting power monitoring system monitors the direct input mains of a lighting system. The status signal is applied to an electronic controller of the lighting system. The status signal is readily interpretable by the electronic controller to determine whether the mains supply is normal of abnormal, and so the control system can control elements of the lighting system (such as the electronic ballast) in an appropriate way in accordance with the circumstances.

In the embodiment the mains supply is considered to be normal when it is an AC signal that varies within tolerances defined by official regulations. When the mains supply signal includes DC components, and falls outside the tolerances, it is considered to be abnormal. A normal mains supply is indicative of correct operation of the general mains power supply. An abnormal mains supply is indicative of an emergency lighting situation, where the normal AC mains supply is replaced by a DC supply from a central battery store.

Advantageously, the detection of the change in the mains supply for normal to abnormal can be used by the electronic controller of the lighting system to optimise its operation. Also, the detection of an abnormal mains supply signal may be used by the electronic controller to automatically switch on the lamp of the lighting system irrespective of whether the lamp of the lighting system is otherwise switched off (by an on/off switch - the status of which may be indicated by a switched mains input).

The low-pass filter may only pass frequencies equal to or less than a tenth of the normal mains supply frequency, and in one embodiment is configured to only pass frequencies equal to or less than a hundredth of the normal mains supply. For example typical mains supply frequency is 50Hz, and so an appropriate low-pass filter would be one that passed frequencies below 5Hz, or more preferably below 0.5Hz.

The emergency lighting mode detection means may include a voltage threshold detector operable to detect when the low-pass filter output exceeds a threshold and to generate a signal indicative thereof. The output of the voltage threshold detector may be a logical 0 or 1 in dependence upon whether the voltage threshold is above or below the threshold. Optionally, a rectifier may be provided between the low-pass filter and the voltage threshold detector in order to enable both negative and positive DC components in the mains input to be detected by a single voltage threshold detector.

Advantageously, the voltage threshold detector in the embodiment is configured to generate the status signals such that the status signal is electrically isolated from the mains input. For example, the voltage threshold detector may comprise an opto-coupler to provide galvanic isolation.

In some embodiments the lighting power monitoring system is further operable to detect the condition of the switched mains input. That is, the system may detect status of the on/off switch for the lamp of the lighting system when the lighting system is in the normal, non-emergency lighting mode. This can be used by the electronic controller to illuminate or extinguish the lamp of the lighting system in accordance user wishes. Advantageously the voltage threshold detector is operable to detect the switched mains input and the low-pass filtered output, receiving them as a combined input. The voltage threshold detector may be arranged to detect the switched mains input only when the low-pass filter output is below the threshold thereof.

The present invention also provides a lighting controller including the lighting power monitoring system mentioned above, and a controller operable to receive and interpret the status signal for optimising control of a lighting system.

The present invention further provides a lighting system, including a lamp, lamp driver means, the lighting power monitoring system mentioned above, and a controller operable to receive and interpret the status signal for optimising control of the lamp driver means. The lamp driver means may include a ballast.

### BRIEF DESCRIPTION OF THE DRAWINGS

For a better understanding of the present invention embodiments will now be described by way of example, with reference to the accompanying drawings, in which:
Figure 1 shows the basic elements of a lighting control system which can be powered by either an AC mains input or a DC input from a central battery;
Figure 2 shows a first embodiment of a lighting power monitoring system in accordance with the first embodiment of the invention;
Figure 3 shows the elements of a lighting power monitoring system of a second embodiment of the invention;
Figure 4 shows the elements of a lighting power monitoring system of a third embodiment of the invention;
Figures 5, 6 and 7 show waveforms for explaining the operation of the first, second and third embodiments of the invention;
Figure 8 shows the elements of a fourth embodiment of the invention in which both switched mains inputs and direct mains inputs are monitored;
Figures 9, 10, 11 and 12 are waveform diagrams for explaining the fourth embodiment of the invention;
Figure 13 shows example input waveforms B-F including DC components that are detectable by embodiments of the invention; and
Figure 14 shows a circuit diagram suitable for implementing the fourth embodiment of the invention.

In the figures the same references signs are generally used to designate like elements.

### DETAILED DESCRIPTION OF EMBODIMENTS OF THE INVENTION

The embodiments are concerned with lighting systems which include both a normal mode and an emergency mode, for example of the general type described above. In such a system, when the normal mains supply is interrupted or malfunctions, this is automatically replaced by DC from a central battery store (such as battery 11 in Figure 1). In order to adapt the control of a lamp, such as lamp 13, so it is optimised for normal or emergency conditions, it is desirable to detect whether what is received at the direct mains input 5 is an AC or DC input. For example, this allows the ballast, such as ballast 9 or other lamp driver means, to be controlled in a way optimised for AC or DC. The lighting system X may comprise an interface, e.g. a DALI interface, for intensity control and / or for maintenance and service control.

The embodiments are concerned with providing a controller, like the controller 15 of Figure 1, with a signal that can be interpreted to provide a reliable determination of whether what is applied to the mains input 5 is AC or DC.

The embodiments provide a new arrangement for receiving the direct mains input 5 and for deriving therefrom an output signal "Out" for application to the controller 15 and which is reliably interpretable by the controller 15 to determine whether what is received at the direct mains input 5 is AC or DC.

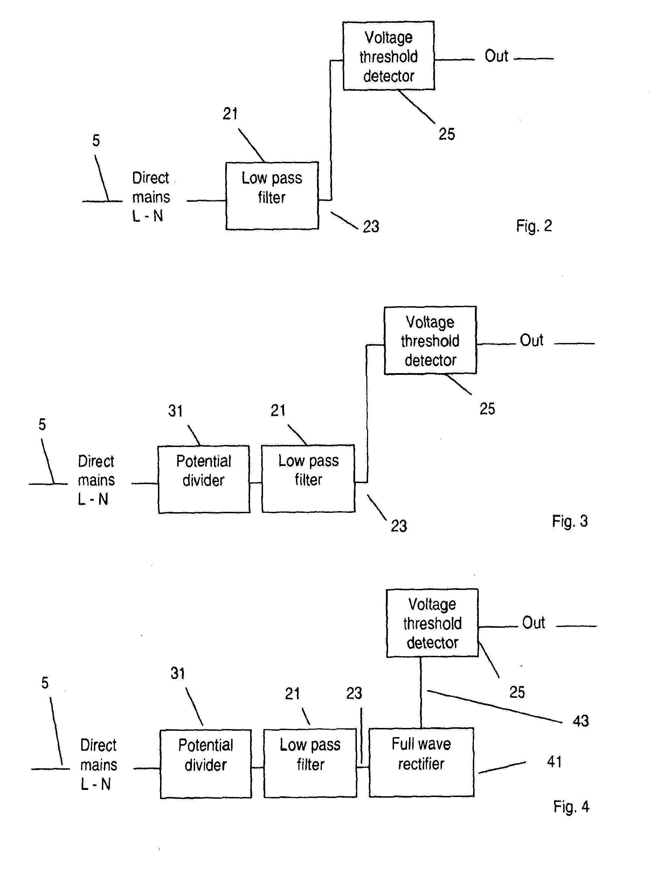

The first embodiment of the invention is shown in Figure 2. In this embodiment the direct mains input 5 is usually received from the conventional general mains supply. For example, in the United Kingdom, the general mains supply is a 230volt (+or-10%) AC supply with a frequency of between 50 and 60 Hz.

In the first embodiment of Figure 2, the detection arrangement comprises a low-pass filter 21 which is coupled to the direct mains input 5 and produces a low-pass filtered output 23 therefrom. The low-pass filter 21 is preferably a very low-pass filter and only passes signals which have a frequency equal to or less than a tenth of the normal mains frequency. For example, if the normal mains frequency is 50Hz, then the low-pass filter 21 may be a 5Hz low-pass filter. It may be preferable for the low-pass filter 21 to only pass signals which have a frequency equal to or less than hundredth of the normal mains frequency. If the normal mains frequency is 50Hz, then the low-pass filter 21 may only pass signals which have a frequency equal to or less than 0.5Hz.

The low-pass filtered output 23 is applied to a voltage threshold detector which produces a binary output (0 or 1) in dependence upon whether the low pass filtered output 23 is above or below the threshold selected for the voltage threshold detector. The output "Out" of the voltage threshold detector 25 is applied to the controller 15 for interpretation thereby. The voltage threshold detector 25 comprise an opto-coupler so that the output signal "Out" is galvanically separated from the mains supply voltage at mains potential.

A second embodiment of the invention is shown in Figure 3, in which a potential divider provided downstream of the low-pass filter 21, between a low-pass filter 21 and the direct mains input 5. The voltage threshold detector 25 is provided as in the first embodiment. The potential divider 31 allows the low-pass filter 21 and the voltage threshold detector 25 to operate at lower voltages. The potential divider 31 may be part of the low-pass filter 21.

A third embodiment of the invention is shown in Figure 4. This embodiment differs from the second embodiment of Figure 3 in that a full wave rectifier 41 is introduced downstream of the voltage threshold detector 25 and upstream of a low-pass filter 21. That is, the full wave rectifier receives the output 23 of a low-pass filter 21, and performs full wave rectification of this, before passing the resultant signal to the voltage threshold detector 25.

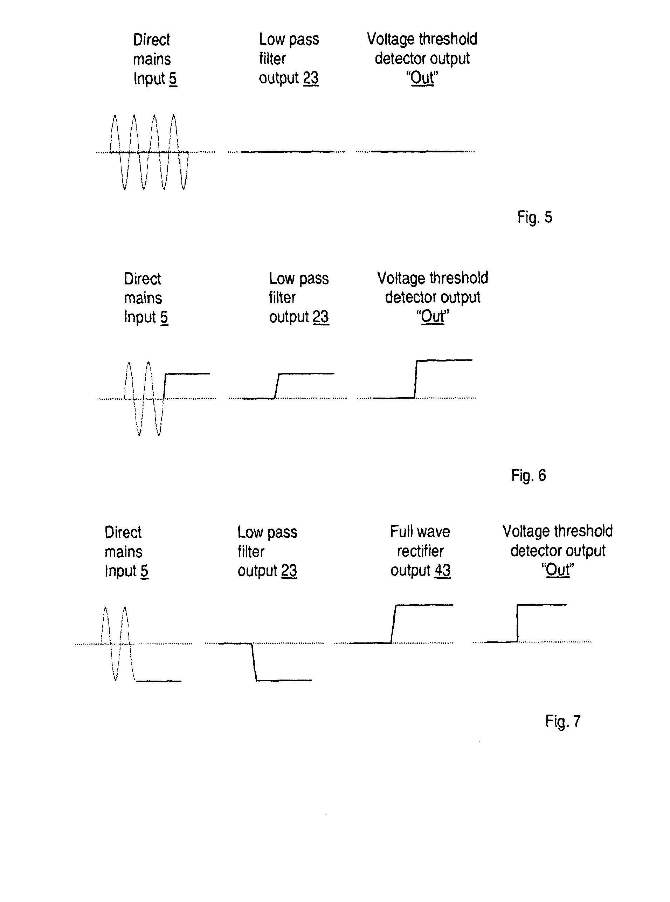

The operation of the first, second and third embodiments will now be described with reference to the waveform diagrams of Figures 5, 6 and 7.

It should be understood that the operation of the first and second embodiments is broadly similar. The introduction of the potential divider 31 in the second embodiment allows the low-pass filter 21 and voltage threshold detector 25 to operate at lower voltages, and so a lower threshold can be used for the threshold voltage detector 25.

When the normal (AC) mains is applied to the direct mains input 5, the output of the low-pass filter 23 is as shown in Figure 5. That is, because the low-pass filter 23 only passes frequencies substantially below the normal mains frequency, none of the AC direct mains input component passes through the low-pass filter 21. The output 23 of the low-pass filter 21 is therefore below the threshold of the voltage threshold detector 25, and the output "Out" of the voltage threshold detector 25 is therefore a constant zero value. For a normal (AC) direct mains input 5 the output "Out" of the voltage threshold detector 25 will be as shown in Figure 5 for the first, second and third embodiment of the invention.

Figure 6 shows how the direct mains input 5 may change when the direct mains input ceases to operate normally and is replaced by DC from a central battery supply. Whilst the direct mains input 5 is AC, the low-pass filter 21 does not pass the AC component to its output 23. However, when the direct mains input 5 becomes DC the frequency thereof is below that of the frequency rating of the low-pass filter 21, and so the DC component is passed to the output 23 of the low-pass filter 21. Whilst the output 23 of the low-pass filter 21 is derived from the AC direct mains input 5, this is below the threshold of the voltage threshold detector 25, and the output "Out" of voltage threshold detector is zero. However, when the output 23 of the low-pass filter 21 corresponds to the DC direct mains input 5, the output 23 is above the threshold of the voltage threshold detector 25, and the output "Out" of the voltage threshold detector 25 is 1. When the direct mains input 5 is a positive DC value, each of the first, second and third embodiments will operate in the manner described in relation to Figure 6.

However, if the direct mains input is a negative DC value, for this to be represented in the output "Out" of the voltage threshold detector 25 the full wave rectifier 41 of the third embodiment should be provided. This is explained in relation to Figure 7. Here, the direct mains input 25 is initially the normal AC mains, and then changes to a negative DC input, for example provided from a central battery store. The output 23 of the low-pass filter 21 is 0 while the direct mains input 5 is AC. However, when the direct mains input 5 becomes negative DC as the frequency rating thereof is below the frequency of the low-pass filter 21, the negative DC is passed by the low-pass filter 21 and is represented at its output 23. If this output 23 of the low-pass filter 21 were applied directly to the voltage threshold detector 25, as in the first and second embodiments, the output 23 would not exceed the threshold of the voltage threshold detector 25, and the output "Out" thereof would be 0. In the third embodiment the full wave rectifier 41 is introduced in order to rectify the output 23 of the low-pass filter 21 so that it is converted into a positive waveform. The output 43 of the full wave rectifier is applied to the voltage threshold detector 25. The part of the output 43 of the full wave rectifier 41 corresponds to the negative DC direct mains input 5 exceeds the threshold of the voltage threshold detector 25, and correspondingly causes the output "Out" of the voltage threshold detector to change from 0 to 1 in response to the direct mains input 5 transiting from AC to negative DC, as shown in Figure 7.

The output signal "Out" of the voltage threshold detector 25 is a fixed, and not pulsing value due to the low frequency cut-off of the low-pass filter 21.

The controller 15 may be configured to interpret the output "Out" of the voltage threshold detector 25 to reliably determine whether the direct mains input 5 is an AC or DC input. The controller 15 can then take appropriate action to optimise operation of the lamp 13. For example, operation of the electronic ballast 9 may be varied in dependence upon whether the direct mains input 5 is AC or DC. Further, the controller will operate the ballast 9 to cause continuous illumination of the lamp 13 when a DC direct mains input 5 is detected in order to provide emergency illumination, irrespective of the status of any switched mains input 3 received by the controller 15.

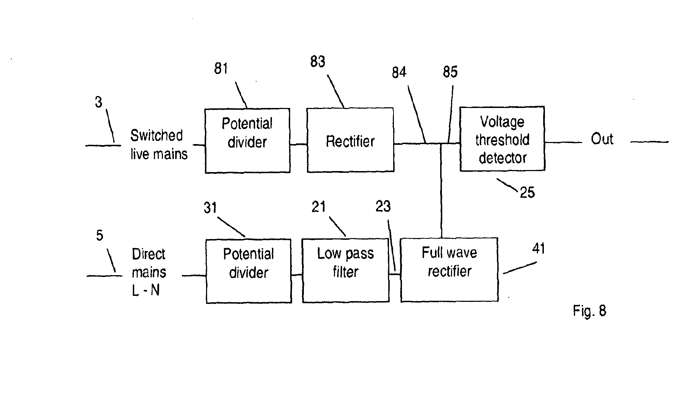

A fourth embodiment of the invention is shown in Figure 8. This embodiment includes the direct mains input 5, potential divider 31, low-pass filter 21, full wave rectifier 41 and voltage threshold detector 25 of the third embodiment, which generally operate in the manner described above. The fourth embodiment is additionally configured to receive the switched mains input 3, which indicates the state of on/off switch used to control the lamp 13 during normal mains (AC) conditions. The switch may be manually operated by a user or may be controlled automatically by electronic means.

The switched mains input 3 is applied to an optional potential divider 81 (to optionally reduce the voltage), and from there to a rectifier 83 (for example, a half wave rectifier). The output 84 of the rectifier 83 is combined with the output 43 of the full wave rectifier 41, and the combined output 85 is applied to the voltage threshold detector 25.

It should be understood that the fourth embodiment may be modified to omit the full wave rectifier 41 (as in the second embodiment) and/or to omit the potential divider 31 (as in the first embodiment).

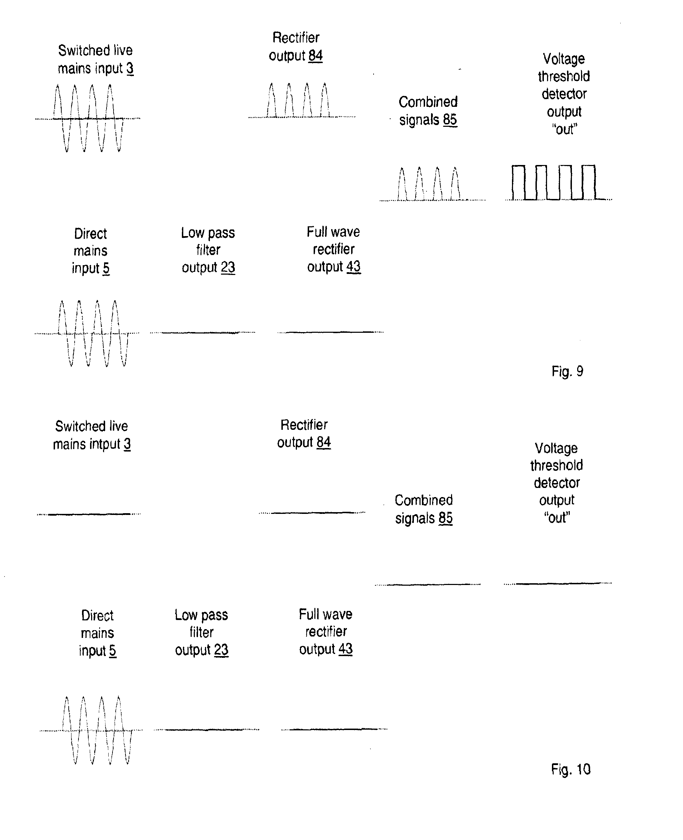

The operation of the fourth embodiment, as shown in Figure 8, will be described with reference to the waveforms of Figures 9, 10, 11 and 12.

In Figure 9 a normal (AC) direct mains input 5 is present. This is filtered by the low-pass filter 21 in the manner described in relation to Figure 5. The output 23 of the low-pass filter 21 is then passed to the full wave rectifier 41 (which does not have any effect on this output of the low-pass filter 21) and which produces output 43. The switched mains input 3 is an AC signal, this being the signal that is provided at the switched mains input when the on/off switch is closed (in order to operate the lamp 13 in normal mains conditions). The AC switched mains input is applied (via the optional potential divider 81) to the rectifier 83 which, in this example performs half wave rectification of the switched mains input 3, and produces a rectified output 84 representing the positive pulses of the switched mains input 3. The rectifier output 84 is combined with a full wave rectifier output 43 and produces a combined signal 85 which is provided to the voltage threshold detector 25. The combined signal corresponds to the output 84 of the rectifier 83, as shown. The pulses of the combined signal 85 exceed the voltage threshold of the voltage threshold detector 25. The voltage threshold detector output "Out" is therefore a square wave pulse alternating between 1 (corresponding to the positive pulses of the rectifier output 84) and 0 (corresponding to the 0 voltage spaced between the positive pulses), as shown.

Figure 10 shows the situation when the switched mains input 3 ceases to be an AC input. The switched mains input in Figure 10 is a constant 0 volt signal, corresponding to the light switch being open (the lamp 13 being switched off when the mains is in the normal mode of operation). The switched mains input 3 is passed by optional potential divider 81 to the rectifier 83 (which does not affect the signal waveform). The output 84 of the rectifier 83 is combined with the output 43 of the full wave rectifier (which is the same as the output of the full wave rectifier described in relation to Figure 9, as it is derived from the same direct mains input 5 waveform). As both the full wave rectifier 41 output 43 and the rectifier 83 output 84 are both 0 volt outputs, the combined signal 85 is also 0 volts. This signal is applied to the voltage threshold detector 25. As the signal does not exceed the voltage threshold, the output of the voltage detector is a constant 0 value, as shown in Figure 10.

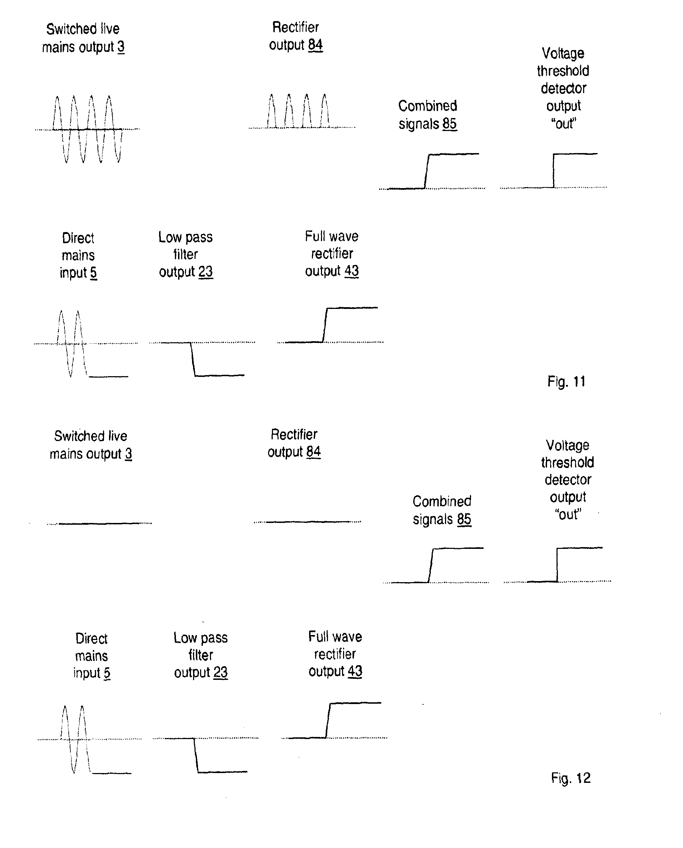

Figure 11 shows the situation when the switched mains input 3 is an AC input signal (the light switch being on) but where the direct mains input 5 changes from AC to DC. The output 43 of the full wave rectifier 41 is the same as described in relation to Figure 7 (where the direct mains input 5 the same). The output 84 of the rectifier 83 is the same as in Figure 9 (the switched mains input 3 being the same). The output 43 and 84 are combined to produce combined signal 85, as shown in Figure 11. As can be seen, the combined signal 85 corresponds to the output 43 of the full wave rectifier 41 and is not influenced significantly by the pulsed output 84 of the rectifier 83. This is because the output 43 is derived from the direct mains input 5 which has a low impedance, whereas the output 84 is derived from the switched mains input 3 which has a high impedance. The low impedance dominates in the combined signal 85. The positive part of the combined signal 85 exceeds the threshold detector 25, which causes the output "Out" thereof to transition from 0 to 1.

Figure 12 shows the operation of the fourth embodiment when the switched mains input is 0 volts (the on/off switch being open to extinguish the lamp 13 in normal mains operation), and where the direct mains input 5 changes from AC to negative DC. The output 43 of the full wave rectifier 41 is the same as in Figures 7 and 11 (the direct mains input 5 being the same). The output 84 of the rectifier 83 is 0 volts (the same as in Figure 10, for the same switched mains input). When the outputs 84 and 43 are combined, the combined signal 85 corresponds to the output 43 of the full wave rectifier 41 (due to the impedance considerations discussed above). The positive part of the combined signal 85 exceeds the threshold of the voltage threshold detector 25 and causes the output "Out" to transition from 0 to 1.

The controller 15 may be programmed to interpret the output "Out" signals from the voltage threshold detector 25 to determine the status of switched mains input 3 and the direct mains input 5.

If the output "Out" is a high frequency pulsed signal (see Figure 9), then this is indicative of the light switch being on and the direct mains supply being normal. The controller 15 can then take appropriate actions to optimise control of the ballast 9 and other elements of the lighting system according to this situation.

If the output signal "Out" is a constant 0 volts signal (Figure 10) this indicates that the light switch is off but that normal direct mains inputs is available. The controller 15 can then take appropriate action in accordance with this situation.

If the output signal "Out" has a value 1 for an extended period of time as in Figures 11 or 12 (i.e. has a frequency lower than the frequency of the pulsed output "Out" signal of Figure 9), then this is indicative of the direct mains input 5 being a (positive or negative) DC signal. The output "Out" signal does not indicate the status of the switched input 3, but this is unnecessary, as the action taken by the controller 15 in this "emergency" situation is the same irrespective of the status of the switches mains input 3. The controller 15 takes appropriate actions to control the ballast 9 and other components of the lighting system to optimise operation of the lamp when supplied by DC from the central battery store 11.

By constantly monitoring the output "Out" the controller 15 can detect transitions between different states of the switched mains input 3 and direct mains input 5 on an ongoing basis and can modify operation of the lighting system accordingly.

In the description in relation to Figures 11 and 12 it is described how the output 43 of the full wave rectifier 41 dominates the combined signal 85, and that the output 84 of the rectifier 83 has little affect on the combined output 85. A different arrangement may be provided in which the opposite occurs, and that the output 84 of the rectifier 83 dominates the combined signal 85 and the output 43 of the full rectifier 41 has little impact on the combined output 85. However, generally the former arrangement will be preferred because the status of the switched mains input 3 is not required during DC direct mains input 5 since in this "emergency" event a lamp 13 is illuminated constantly, and the status of on/off switch is irrelevant.

The fourth embodiment is highly advantageous in that a single voltage threshold detector 25 can be used to provide an output "Out" that indicates, where relevant, the status of the switch to live input 3, and the status of the direct mains input 5. The use of a single voltage threshold detection 15 (which may incorporate an opto-coupler to provide galvanic isolation) is highly advantageous, as such components can be expensive and bulky.

It should be understood that the full wave rectifier 41 can be omitted from the fourth embodiment. The output 23 of the low-pass filter 21 will then be combined directly with the output 84 of the rectifier 83. The operation will be the same except that a negative DC direct mains input 5 will not be detected. It will also be understood that the potential divider 31 can be omitted from the fourth embodiment if it is not desired to apply lower voltages to the low-pass filter 21 and the full wave rectifier 41 (if provided). It has already been indicated that the second potential divider 81 for the switched mains input 3 is optional.

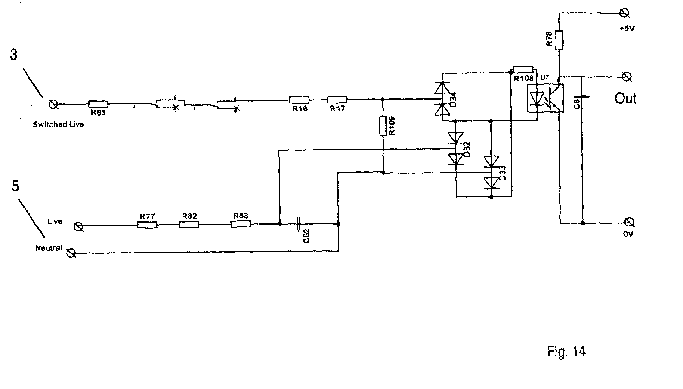

Non-detection of either the switched mains or direct mains signal will also be separately detectable as a different static signal, e.g. plus 5 volts. In the example of Fig. 14 (described in more detail below) the opto-coupler U7 in conjunction with resistor R78 will provide an inverted signal. This means that non-detection will appear as logic '1' (e.g. plus 5 volts).

If the switched mains detection and the direct mains detection are combined, and the direct mains is DC (as in Figure 11 and 12), this will cause the pulses to become a logical "0".

If the switches mains input 3 and the direct mains input 5 are different phases or frequencies, then the light monitoring system will still operate in the manner described above.

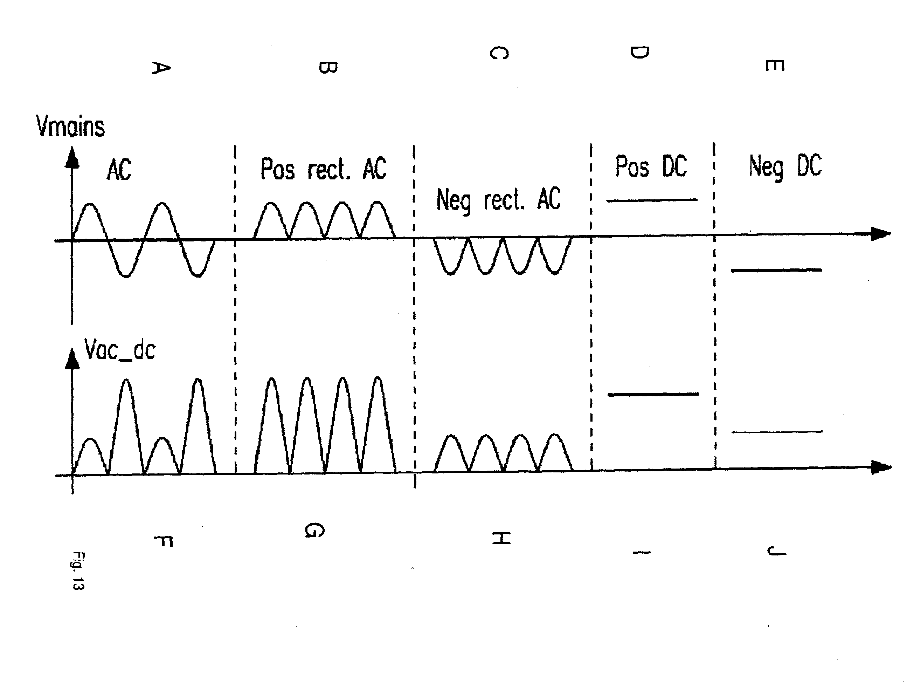

The embodiments are particularly advantageous because they allow many types of DC direct mains inputs 5 to be detected. The embodiments allow the output "Out" to reliably indicate whether an AC direct mains input 5 (waveform A of Figure 13) is present, or whether any of various types of direct mains inputs 5 including a DC component are present. The output "Out" of the voltage threshold detector 25 will be a logical 1 value (of low frequency) when a pulsed DC direct mains input 5 is present as shown in waveform B, C, F, G or H of Figure 13, whilst also allowing constant positive DC (waveforms D, I and J) or constant negative DC (waveform E) to be detected. The presence of a DC component in the direct mains input 5 is detectable in more situations than in prior art methods.

A circuit for implementing the lighting monitoring system is shown in Figure 14. The direct mains input 5 is fed to a combined potential divider and low-pass RC filter implemented by resistor R 77, resistor R 82, resistor R 83 and capacitor C 52 with a roll-off frequency of 0.3Hz in this example. This will produce a minimum output voltage for AC signals but a large (positive or negative) voltage when any DC content is present. This will occur with any pulsed DC waveform of any distortion level, and also static DC. It will also detect any "AC" mains with some additional imposed DC content. The full wave rectifier 41 is implemented by diode pairs D32 and D33. The function of the voltage threshold detector 25 is performed by opto-coupler U7 which provides a voltage threshold of about 1.1 volts (but this threshold is larger due to the rectifires 41 and 83 and so the threshold is about 2.3 volts). The opto-coupler U7 also provides isolation.

Figure 14 also shows the switched live input 3, the potential divider 81 implemented by resistors R63, R16 and R17, and the rectifier 83 implemented by the diode pair D34, the output 84 of which is applied to the opto-coupler U7 in combination with the output 43 of the full wave rectifier 41. The isolated output of the opto-coupler U7 "Out" can be applied to the controller 15 to enable detection of the relevant states of the switched mains input 3 and the direct mains input 5.

The embodiments may offer the following advantages:
1. Detection is independent of the phase if used on multiphase systems.
2. Detection may be independent of distortions often seen on mains systems, for example static DC or full-wave rectified AC (pulsed DC systems).
3. Detection is independent of noise often seen on mains systems.
4. Detection is independent of the polarity of the DC content applied.
5. Detection is independent of the frequency of the AC or pulsed DC waveforms, provided these are above 5Hz.
6. The arrangement will operate even if the AC content is still available, but the DC content is added at the same time.
7. Large high voltage capacitors are not used, the circuit now being smaller and more cost effective.
8. The circuit can be adapted to operate with other functions, such as a switched-live sense circuit.

Depending on the type of mains voltage detected on the direct mains input 5, the controller 15 may put the electronic ballast 9 into different operation modes, e.g. to illuminate the lamp 13 at a given intensity level. The different types of operation depending on the type of detected mains voltage may be also programmed in the controller 15 and may be changed through a interface (e.g. DALI interface). For example the dimming range can be limited due to the detected type of mains voltage or a certain dimming level can be selected (e.g. in emergency mode).

## Claims

1. A lighting power monitoring system for detecting the availability of a normal or abnormal mains supply at a mains input (5) to enable activation of an emergency lighting mode in dependence thereon, the system including a low-pass filter (21) coupled to the mains input (5) for producing a low-pass filtered output (23), and emergency lighting mode detection means (25) arranged to generate a status signal ("Out") indicative of the normal or abnormal status of the mains input (5), **characterized in that** the low-pass filter is configured to remove AC components from the mains input such that the emergency lighting mode detection means (25) is able to detect DC components from the mains input (5).

2. The system of claim 1, wherein the low-pass filter (21) is configured to only pass frequencies equal to or less than a tenth of the normal mains supply (5).

3. The system of claim 1 or 2, wherein the emergency lighting activation mode detection means (25) includes a voltage threshold detector operable to detect when the low-pass filter output (23) exceeds a threshold and to generate a status signal ("Out") indicative thereof.

4. The system of claim 3, wherein the voltage threshold detector is configured to generate the status signal ("Out") such that the status signal ("Out") is electrically isolated from the mains input (5).

5. The system of claim 4, wherein the voltage threshold detector comprises an opto-coupler.

6. The system of any one of claims 1 to 5, including rectifier means (41) for rectifying the low-pass filter output (23).

7. The system of any one of claims 1 to 6, which is further operable to detect the condition of a switched mains input (3).

8. The system of claim 7, wherein switched mains input (3) is monitored either directly or indirectly.

9. The system of claim 7 or 8, when dependent on any one of claims 4, 5 and 6, wherein the voltage threshold detector is operable to detect the switched mains input (3).

10. The system of claim 9, wherein the voltage threshold detector is arranged to detect the switched mains input (3) only when the low-pass filter output (23) is below the threshold.

11. A lighting controller including the lighting power monitoring system of any one of claims 1 to 10, and a controller operable to receive and interpret the status signal ("Out") for optimising control of a lighting system.

12. A lighting system, including a lamp, lamp driver means, the lighting power monitoring system of any one of claims 1 to 10, and a controller operable to receive and interpret the status signal ("Out") for optimising control of the lamp driver means.

## Patentansprüche

1. Beleuchtungsleistungs-Überwachungssystem zum Nachweis der Verfügbarkeit einer normalen oder anormalen Netzversorgung an einem Netzeingang (5), um in Abhängigkeit davon die Aktivierung eines Notbeleuchtungsmodus zu ermöglichen, wobei das System einen Tiefpassfilter (21) umfasst, der mit dem Netzeingang (5) gekoppelt ist, um eine tiefpass-gefilterten Ausgabe (23) zu erzeugen, und Notbeleuchtungsmodus-Erkennungsmittel (25), die angeordnet sind, um ein Statussignal ("Aus") zu erzeugen, das den normalen oder anormalen Status der Netzeingangs (5) angibt, **dadurch gekennzeichnet, dass** der Tiefpassfilter konfiguriert ist, um die Wechselstromkomponenten vom Netzeingang zu entfernen, so dass das Notbeleuchtungsmodus- Erkennungsmittel (25) dazu in der Lage ist, Gleichstromkomponenten am Netzeingang (5) zu erkennen.

2. System nach Anspruch 1, wobei der Tiefpassfilter (21) konfiguriert ist, um nur Frequenzen durchzulassen, die gleich einem oder weniger als ein Zehntel der normalen Netzversorgung (5) darstellen.

3. System nach Anspruch 1 oder 2, wobei das Notbeleuchtungsaktivierungsmodus-Erkennungsmittel (25) einen Spannungsschwellen-Detektor umfasst, der dazu ausgelegt ist nachzuweisen, dass die tiefpass-gefilterte Ausgabe (23) eine Schwelle übersteigt, und ein Statussignal ("Aus") zu erzeugen, das dies anzeigt.

4. System nach Anspruch 3, wobei der Spannungsschwellen-Detektor ausgelegt ist ein Statussignal ("Aus") zu erzeugen, so dass das Statussignal ("Aus") elektrisch vom Netzeingang (5) isoliert ist.

5. System nach Anspruch 4, wobei der Spannungsschwellen-Detektor einen Optokoppler umfasst.

6. System nach einem der Ansprüche 1 bis 5, aufweisend Gleichrichtermittel (41), um die tiefpass-gefilterte Ausgabe (23) gleichzurichten.

7. System nach einem der Ansprüche 1 bis 6, das weiterhin dazu ausgelegt ist, um den Zustand eines geschalteten Netzeingangs (3) zu erkennen.

8. System nach Anspruch 7, wobei der geschaltete Netzeingang (3) entweder direkt oder indirekt überwacht wird.

9. System nach Anspruch 7 oder 8, wenn abhängig von einem der Ansprüche 4, 5 und 6, wobei der Spannungsschwellen-Detektor betriebsbereit ist, um den geschalteten Netzeingang (3) zu erkennen.

10. System nach Anspruch 9, wobei der Spannungsschwellen-Detektor angeordnet ist, um den geschalteten Netzeingang (3) nur dann zu erkennen, wenn sich die tiefpass-gefilterte Ausgabe (23) unter der Schwelle befindet.

11. Beleuchtungs-Steuervorrichtung, darin eingeschlossen ein Beleuchtungsleistungs-Überwachungssystem nach einem der Ansprüche 1 bis 10 und eine Steuervorrichtung, die betriebsbereit ist, um das Statussignal ("Aus") zu erhalten und zu interpretieren, um die Steuerung eines Beleuchtungssystems zu optimieren.

12. Beleuchtungssystem, darin eingeschlossen eine Lampe, Lampenbetriebsmittel, das Lampenleistungs-Überwachungssystem nach einem der Ansprüche 1 bis 10, und eine Steuervorrichtung, die dazu ausgelegt ist, um das Statussignal ("Aus") zu erhalten und zu interpretieren, um die Steuerung der Lampenantriebsmittel zu optimieren.

## Revendications

1. Système de surveillance de puissance d'éclairage destiné à détecter la disponibilité d'une alimentation secteur normale ou anormale au niveau d'une entrée d'alimentation secteur (5) en vue de permettre l'activation d'un mode d'éclairage d'urgence en fonction de celle-ci, le système incluant un filtre passe-bas (21) couplé à l'entrée d'alimentation secteur (5) en vue de produire une sortie filtrée par filtre passe-bas (23), et un moyen de détection de mode d'activation d'éclairage d'urgence (25) agencé de manière à générer un signal d'état (« Out ») indicatif de l'état normal ou anormal de l'entrée d'alimentation secteur (5), **caractérisé en ce que** le filtre passe-bas est configuré de manière à supprimer des composantes de courant CA de l'entrée d'alimentation secteur, de sorte que le moyen de détection de mode d'activation d'éclairage d'urgence (25) est apte à détecter des composantes CC à partir de l'entrée d'alimentation secteur (5).

2. Système selon la revendication 1, dans lequel le filtre passe-bas (21) est configuré de manière à ne laisser passer que des fréquences égales ou inférieures à un dixième de l'alimentation secteur normale (5).

3. Système selon la revendication 1 ou 2, dans lequel le moyen de détection de mode d'activation d'éclairage d'urgence (25) inclut un détecteur de seuil de tension exploitable de manière à détecter le moment où la sortie de filtre passe-bas (23) dépasse un seuil, et à générer un signal d'état (« Out ») indicatif de cela.

4. Système selon la revendication 3, dans lequel le détecteur de seuil de tension est configuré de manière à générer le signal d'état (« Out »), de sorte que le signal d'état (« Out ») est électriquement isolé de l'entrée d'alimentation secteur (5).

5. Système selon la revendication 4, dans lequel le détecteur de seuil de tension comporte un coupleur optoélectronique.

6. Système selon l'une quelconque des revendications 1 à 5, incluant un moyen de redresseur (41) pour redresser la sortie de filtre passe-bas (23).

7. Système selon l'une quelconque des revendications 1 à 6, lequel est en outre exploitable de manière à détecter l'état d'une entrée d'alimentation secteur commutée (3).

8. Système selon la revendication 7, dans lequel l'entrée d'alimentation secteur commutée (3) est surveillée directement ou indirectement.

9. Système selon la revendication 7 ou 8, lorsqu'elle dépend de l'une quelconque des revendications 4, 5 et 6, dans lequel le détecteur de seuil de tension est exploitable de manière à détecter l'entrée d'alimentation secteur commutée (3).

10. Système selon la revendication 9, dans lequel le détecteur de seuil de tension est agencé de manière à détecter l'entrée d'alimentation secteur commutée (3) uniquement lorsque la sortie de filtre passe-bas (23) est inférieure au seuil.

11. Dispositif de commande d'éclairage incluant le système de surveillance de puissance d'éclairage selon l'une quelconque des revendications 1 à 10, et un dispositif de commande exploitable de manière à recevoir et à interpréter le signal d'état (« Out ») en vue d'optimiser la commande d'un système d'éclairage.

12. Système d'éclairage, incluant une lampe, un moyen de commande de lampe, le système de surveillance de puissance d'éclairage selon l'une quelconque des revendications 1 à 10, et un dispositif de commande exploitable de manière à recevoir et à interpréter le signal d'état (« Out ») en vue d'optimiser la commande du moyen de commande de lampe.
